# EUROPEAN PATENT SPECIFICATION

(11) **EP 3 446 518 B1**
(45) Date of publication and mention of the grant of the patent: **05.01.2022**
(21) Application number: 16719807.6
(22) Date of filing: 19.04.2016
(51) Int. Cl.: H04W 48/16, H04W 12/04, H04W 12/08

(54) **NETWORK AUTHORIZATION ASSISTANCE**
UNTERSTÜTZUNG BEI DER NETZWERKAUTHORISIERUNG
ASSISTANCE D'AUTORISATION DE RÉSEAU

(43) Date of publication of application: 27.02.2019
(73) Proprietor: Nokia Solutions and Networks Oy, 02610 Espoo (FI)
(72) Inventor: HORN, Guenther, 80331 München (DE); JERICHOW, Anja, 85567 Grafing (DE)
(74) Representative: Nokia EPO representatives
(86) International application number: PCT/EP2016/058642
(87) International publication number: WO 2017/182057

(56) References cited:
- WO-A1-2009/146729
- WO-A1-2010/076044
- US-A1- 2015 341 788
- NOKIA SIEMENS NETWORKS ET AL: "Pseudo-CR on alignment of Access Network Identity", 3GPP DRAFT; C1-085526, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shanghai, P.R. China; 20081117, 17 November 2008 (2008-11-17), XP050310386, [retrieved on 2008-11-17]
- "3rd Generation Partnership Project; Technical Specification Group Services and System Aspects; Security aspects of WLAN network selection for 3GPP terminals (Release 12)", 3GPP DRAFT; S3-140267_WLAN_NS_33.865-050-TR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 7 February 2014 (2014-02-07), XP050766591, Retrieved from the Internet: URL:http://www.3gpp.org/ftp/tsg_sa/WG3_Sec urity/TSGS3_74_Taipei/Docs/ [retrieved on 2014-02-07]
- HUAWEI ET AL: "Manual PLMN selection function", 3GPP DRAFT; C1-142178_MANUAL PLMN SELECTION MODE PROCEDURE_24.302_REL12, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. CT WG1, no. Phoenix; 20140519 - 20140523 26 May 2014 (2014-05-26), XP050808029, Retrieved from the Internet: URL:http://www.3gpp.org/ftp/tsg_ct/WG1_mm- cc-sm_ex-CN1/TSGC1_87_Phoenix/docs/ [retrieved on 2014-05-26]
- 3GPP: "3rd Generation Partnership Project;Technical Specification Group Services and System Aspects; Rationale and track of security decisions in Long Term Evolved (LTE) RAN / 3GPP System Architecture Evolution (SAE) (Release 8)", 3GPP DRAFT; S3-070898-TR33821-V050-TR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. Munich; 20071012, 12 October 2007 (2007-10-12), XP050280305, [retrieved on 2007-10-12]
- "On the Inputs to the EPS Kasme Key Derivation Function", 3GPP DRAFT; S3-080867, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. Sophia; 20080627, 27 June 2008 (2008-06-27), XP050280990, [retrieved on 2008-06-27]
- CHINA MOBILE: "[MTCe] Key derivation clarification about group authentication mechanism", 3GPP DRAFT; S3-151333 [MTCE] KEY DERIVATION CLARIFICATION ABOUT GROUP AUTHENTICATION MECHANISM V2, 3RD GENERATION PARTNERSHIP PROJECT (3GPP), MOBILE COMPETENCE CENTRE ; 650, ROUTE DES LUCIOLES ; F-069 , vol. SA WG3, no. Nanjing, China; 20150420 - 20150424 19 April 2015 (2015-04-19), XP050943537, Retrieved from the Internet: URL:http://www.3gpp.org/ftp/Meetings_3GPP_ SYNC/SA3/Docs/ [retrieved on 2015-04-19]

## Description

### Field

The present invention relates to network authorization assistance. More specifically, the present invention exemplarily relates to measures (including methods, apparatuses and computer program products) for realizing network authorization assistance.

### Background

The present specification generally relates to challenges posed by an increasing number of radio access networks not operated by mobile operators and supplementing the mobile operator's networks.

Namely, while the confidence a mobile user may have in a mobile operator and the mobile network infrastructure provided by the mobile operator may be high, it cannot be assumed that supplementary networks do have similar security standards.

Such supplementary radio access networks may be isolated Long Term Evolution (LTE) networks, which may be provided for commercial use and/or for public safety use. Networks addressing the latter use are known as isolated operation of E-UTRAN in public safety (IOPS) networks.

Regarding IOPS networks, background for public safety operations in isolated E-UTRAN scenarios can be found in 3GPP TR 23.797 "Study on architecture enhancements to support Isolated E-UTRAN Operation for Public Safety" and 3GPP TS 22.346 "Isolated Evolved Universal Terrestrial Radio Access Network (E-UTRAN) operation for public safety; Stage 1 "(requirements).

Security related key issues and a solution for dedicated universal subscriber identity modules (USIM) for local evolved packet core (EPC) usage are defined in 3GPP SA3 TR 33.897 and 3GPP TS 33.401. There is no deviation of the existing LTE security procedures when provided by a local home subscriber server (HSS) in IOPS mode.

Such supplementary radio access network may further be a network utilizing a technology known as "MuLTEfire". Loosely speaking, MuLTEfire is a technique using LTE access in a wireless local area network (WLAN) fashion, and thus, does not correspond to isolated operation. MuLTEfire assumes a modified EPC. MuLTEfire authentication may be used based on USIMs or on certificates. The invention explained in this document is, if applied to MuLTEfire networks, directed to MuLTEfire networks with USIM-based authentication. There are two forms of USIM-based authentication: using evolved packet system (EPS) authentication and key agreement (AKA), as defined for LTE access to the EPC in 3GPP TS 33.401, or using extensible authentication protocol EAP-AKA', as defined for non-3GPP access to the EPC in 3GPP TS 33.402

While in this document it is referred to 3^{rd} Generation Partnership Project (3GPP) LTE networks, the present invention is not limited to this technology and may be applicable to any mobile access technology.

In particular, the present invention may be applied to future 3GPP 5G (5^{th} generation) networks, where the authentication may rely on EAP methods or similar access agnostic authentication methods.

The use of supplementary networks may be advantageous in certain scenarios, e.g. for UEs interested in paying extra for being served in isolated LTE networks for various reasons or when the operator of the isolated network has an interest that the user is attracted to it, e.g. in a shopping mall, cruising boat or a hotel.

Other commercial contexts for supplementary LTE networks are envisaged to be e.g. a mining area, where the employees could be isolated. Future scenarios could also be shopping centers, where the consumers are temporarily locally served for advertisement purpose, e.g. participating at some quest or other event to win a voucher, and later switch back to a normal network mode.

In the present documents, the general term isolated LTE networks is used which includes at least commercial variants of isolated LTE networks like e.g. SALTE as well as public safety networks like IOPS. The more general terms alternative LTE networks and supplementary radio access networks are used which include isolated LTE networks, MuLTEfire networks as well as non-LTE networks, e.g. above-mentioned 5G networks.

Within an alternative LTE network, or more general, with a supplementary radio access network, all the signaling and user data can be seen in the clear in the MME and the serving gateway (S-GW), if it is not end-to-end encrypted.

Thus, the user of such an alternative LTE network, or more general, of such a supplementary radio access network, needs to trust the operating entity of this supplementary network.

However, an increasing number of small alternative LTE networks is expected for the future. There may be a method for the user for authenticating the network, which means that, after successful authentication, the user/UE has corroborated the identity of the respective network. However, in such case, the user/UE is faced with the problem to identify the candidate network as a network to be trusted or not to be trusted.

In this regard, as already mentioned above, it is expectable that the trust that the user may have in a mobile operator (in particular the mobile operator the home public land mobile network (HPLMN)) does not necessarily extend to a hotel or shopping mall operating an alternative LTE network (supplementary radio access network). The mere fact that the alternative LTE network is able to obtain authentication vectors from the user's home operator may not suffice for the user to establish trust in the alternative LTE network.

Due to the large number of such networks, and the possibly short-lived nature of roaming contracts, the home operator may not be able to vouch for the security of the alternative LTE network. Furthermore, already today the trust model of the DIAMETER interconnect network may show some weaknesses. Namely, (too) many entities have access to the HSS and/or the interconnect network. It is expected that this problem will be exacerbated in the future.

Risks in such scenario may thus arise from at least two cases. Namely, an alternative LTE network (supplementary radio access network) may not be deployed in a sufficiently secure manner, thereby offering attackers an easy way to gain control or steal secret keys. Furthermore, the operating entity (operator) of the alternative LTE network (supplementary radio access network) itself may have malicious intentions. In any of these two cases, the confidentiality and integrity of the user's data is in peril.

Hence, the problem arises that sufficient information cannot be obtained in a secure manner to make an informed decision about whether access to a given alternative LTE network (supplementary radio access network) is wanted/intended. In this regard, "in a secure manner" means that the user can verify that the information comes from a trustworthy source, e.g. the user's home operator. Information that can be generated by an alternative LTE network (supplementary radio access network) locally is not trustworthy.

Hence, there is a need to provide for network authorization assistance.

*Further prior art can be found in document '*NOKIA SIEMENS NETWORKS ET AL: "Pseudo-CR on alignment of Access Network Identity", 3GPP DRAFT; C1-085526, 3RD GENERATION PARTNERSHIP PROJECT (3GPP)*, MOBILE COMPETENCE CENTRE; 650, ROUTE DES LUCIOLES; F-06921 SOPHIA-ANTIPOLIS CEDEX; FRANCE; Shanghai, P.R. China; 20081117, 17 November 2008, XP050310386', disclosing a UE functionality according to which a UE is able to check whether an access network identity (ANID) received from an authentication, authorization and accounting (AAA) server corresponds to the UE's own understanding about which access network the UE is attached to. According thereto, the UE shall apply rules for comparison of the locally determined ANID and the one received over EAP-AKA'. The UE, or the user, may use the ANID as a basis for an optional decision whether the access network is authorized to serve the UE. As an* *example, the UE may compare the ANID against a list of preferred or barred ANIDs.*

*Further prior art can be found in document '"3rd Generation Partnership Project; Technical Specification Group Services and System Aspects; Security aspects of WLAN network selection for SGPP terminals (Release 12)", 3GPP DRAFT; S3-140267_WLAN_NS_33.865-050-TR, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE; 7 February 2014, XP050766591'. Further prior art can be found in document 'HUAWEI ET AL: "Manual PLMN selection function", 3GPP DRAFT; C1-142178_MANUAL PLMN SELECTION MODE PROCEDURE_24.302_REL12, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE; CT WG1, Phoenix; 20140519* - *20140523, 26 May 2014, XP050808029'.*

### Summary

Various exemplary embodiments of the present invention aim at addressing at least part of the above issues and/or problems and drawbacks.

*In particular, the above mentioned objects are achieved by what is defined in the appended independent claims. Advantageous modifications thereof are set forth in the appended dependent claims.*

Any one of the above aspects enables an efficient assistance for decision about whether the access to a given supplementary radio access network is intended or not to thereby solve at least part of the problems and drawbacks identified in relation to the prior art.

By way of exemplary embodiments of the present invention, there is provided network authorization assistance. More specifically, by way of exemplary embodiments of the present invention, there are provided measures and mechanisms for realizing network authorization assistance.

Thus, improvement is achieved by methods, apparatuses and computer program products enabling/realizing network authorization assistance.

### Brief description of the drawings

In the following, the present invention will be described in greater detail by way of non-limiting examples with reference to the accompanying drawings, in which
Figure 1 is a block diagram illustrating an apparatus according to exemplary embodiments of the present invention,
Figure 2 is a block diagram illustrating an apparatus according to exemplary embodiments of the present invention,
Figure 3 is a block diagram illustrating an apparatus according to exemplary embodiments of the present invention,
Figure 4 is a block diagram illustrating an apparatus according to exemplary embodiments of the present invention,
Figure 5 is a block diagram illustrating an apparatus,
Figure 6 is a block diagram illustrating an apparatus,
Figure 7 is a schematic diagram of a procedure according to exemplary embodiments of the present invention,
Figure 8 is a schematic diagram of a procedure according to exemplary embodiments of the present invention,
Figure 9 is a schematic diagram of a procedure,
Figure 10 is a block diagram alternatively illustrating apparatuses.

### Detailed description of drawings and embodiments of the present invention

The present invention is described herein with reference to particular non-limiting examples and to what are presently considered to be conceivable embodiments of the present invention. A person skilled in the art will appreciate that the invention is by no means limited to these examples, and may be more broadly applied.

It is to be noted that the following description of the present invention and its embodiments mainly refers to specifications being used as non-limiting examples for certain exemplary network configurations and deployments. Namely, the present invention and its embodiments are mainly described in relation to 3GPP specifications being used as non-limiting examples for certain exemplary network configurations and deployments. As such, the description of exemplary embodiments given herein specifically refers to terminology which is directly related thereto. Such terminology is only used in the context of the presented non-limiting examples, and does naturally not limit the invention in any way. Rather, any other communication or communication related system deployment, etc. may also be utilized as long as compliant with the features described herein.

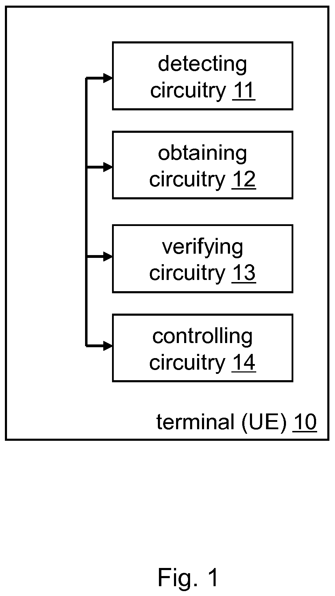

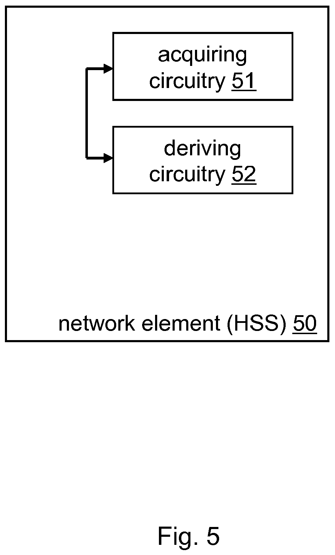

Hereinafter, various embodiments and implementations of the present invention and its aspects or embodiments are described with reference to figures 1 to 4, 7 and 8 using several variants and/or alternatives. It is generally noted that, according to certain needs and constraints, all of the described variants and/or alternatives may be provided alone or in any conceivable combination (also including combinations of individual features of the various variants and/or alternatives). The embodiments described with reference to figures 5, 6, 9 and 10 relate to unclaimed subject-matter.

According to exemplary embodiments of the present invention, in general terms, there are provided measures and mechanisms for (enabling/realizing) network authorization assistance.

According to 3GPP TS 22.011 and 3GPP TSS 23.122, procedures for network selection are specified, which involve lists of preferred public land mobile networks (PLMN) and forbidden PLMNs. Both, operator and user, may manage the lists of preferred PLMNs. These lists are based on PLMN identities. Here, PLMN identities may be seen as trustworthy information, since they are input to the key K_{ASME} computed in the HSS. In particular, the key K_{ASME} is derived under consideration of the respective PLMN identity.

However, due to the large number of alternative LTE networks (supplementary radio access networks) expected for the future, and the relatively short length of a PLMN identity (MCC+MNC with MNC 2 or 3 bytes and MCC meaning mobile country code and MNC meaning mobile network code), the PLMN identity alone may not give sufficient information for a user to make an informed decision about the trustworthiness of an alternative LTE network. Namely, it has for example been discussed that all IOPS networks in a country get the same MNC. Therefore, richer information than just the PLMN identities may be desirable.

According to 3GPP TS 33.402 (Security for non-3GPP access to the EPC), the use of an access network identifier (ANID) is specified. The format of the ANID is specified in TS 24.302, clause 8.1.1. Namely, the ANID may be represented as a character string (and may be readable by a human in this way). When represented as an octet string it has a maximum length of 253 octets. The ANID is structured as an ANID Prefix and none, one or more ANID additional character strings separated by the colon character (":"). Thus, the ANID has a rich structure which may be able to convey potentially sufficient information to the user for making an informed decision on the network it is about to connect to. However, the rich structure of the ANID is currently vastly underused: according to TS 24.302, the ANID takes only one value per access network technology, i.e. "WLAN" for all WLAN networks, "WIMAX" for all worldwide interoperability for microwave access (WiMAX) networks etc.

For MuLTEfire, it was mentioned above that one possibility for authentication is using EAP-AKA'. Then the concept of ANID applies. But here, again, it has been proposed to set the ANID to "WLAN" in all cases.

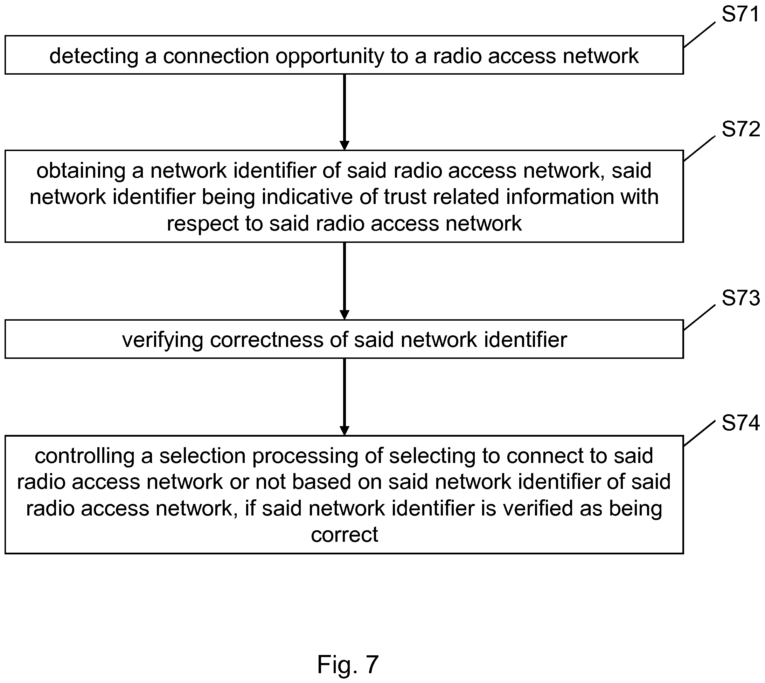

Figure 1 is a block diagram illustrating an apparatus according to exemplary embodiments of the present invention. The apparatus may be a terminal 10 such as a user equipment comprising a detection circuitry 11, an obtaining circuitry 12, a verifying circuitry 13, and a controlling circuitry 14. The detecting circuitry 11 detects a connection opportunity to a radio access network. The obtaining circuitry 12 obtains a network identifier of said radio access network, said network identifier being indicative of trust related information with respect to said radio access network. The verifying circuitry 13 verifies correctness of said network identifier. The controlling circuitry 14 controls a selection processing of selecting to connect to said radio access network or not based on said network identifier of said radio access network, if said network identifier is verified as being correct. Figure 7 is a schematic diagram of a procedure according to exemplary embodiments of the present invention. The apparatus according to Figure 1 may perform the method of Figure 7 but is not limited to this method. The method of Figure 7 may be performed by the apparatus of Figure 1 but is not limited to being performed by this apparatus.

As shown in Figure 7, a procedure according to exemplary embodiments of the present invention comprises an operation of detecting (S71) a connection opportunity to a radio access network, an operation of obtaining (S72) a network identifier of said radio access network, said network identifier being indicative of trust related information with respect to said radio access network, an operation of verifying (S73) correctness of said network identifier, and an operation of controlling (S74) a selection processing of selecting to connect to said radio access network or not based on said network identifier of said radio access network, if said network identifier is verified as being correct.

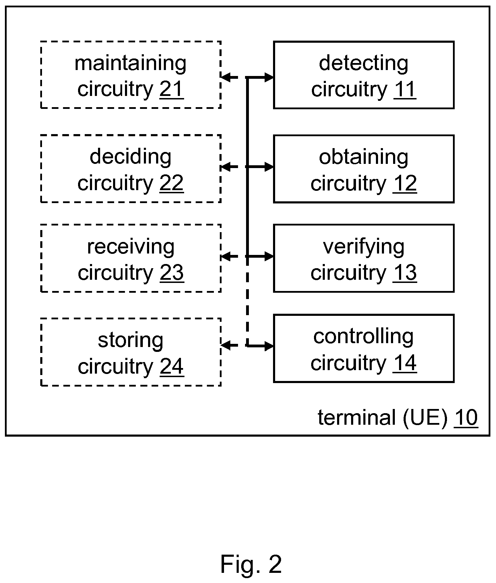

Figure 2 is a block diagram illustrating an apparatus according to exemplary embodiments of the present invention. In particular, Figure 2 illustrates a variation of the apparatus shown in Figure 1. The apparatus according to Figure 2 may thus further comprise a maintaining circuitry 21, a deciding circuitry 22, a receiving circuitry 23, and/or a storing circuitry 24.

With respect to the verifying, it is noted that thus the selection process is based on a network identifier that is "message authenticated" by a source trusted by the UE (the UE's home network) and is not based on some network identifier broadcast over the radio in an unprotected way. The correctness of the network identifier is verified by using a locally available cryptographic key to check a received message authentication code vouching for the network identifier.

According to exemplary embodiments of the present invention, said network identifier comprises one or more character strings separated from each other.

In particular, according to exemplary embodiments of the present invention, the network identifier may be hierarchically structured and the structure may comprise one or more character strings. In particular, the network identifier may be arbitrarily expandable by addition of arbitrary character strings. Thus, by means of such rich structure, the network identifier is be enabled to convey potentially sufficient information to the user/UE for making an informed decision on the network it is about to connect to.

Such structure may be represented by character strings which are separated from each other, for example, by the colon character (":") or comparable characters.

As a concrete example, according to exemplary embodiments of the present invention, an ANID may be used as such network identifier. Alternatively, the PLMN identifier (or the serving network identifier that is broadcast by the network) may be enhanced by instead either using an ANID itself or taking the ANID structure as a model for extending the PLMN identifier or serving network identifier.

According to a variation of the procedure shown in Figure 7, exemplary additional operations and exemplary details of the controlling operation (S74) are given, which are inherently independent from each other as such. According to such variation, an exemplary method according to exemplary embodiments of the present invention may comprise an operation of maintaining an allowed network identifier list indicative of at least one allowed radio access network identifier. Further, such exemplary controlling operation (S74) according to exemplary embodiments of the present invention may comprise an operation of deciding to connect to said radio access network, if said allowed network identifier list is indicative of said network identifier of said radio access network.

According to further exemplary embodiments of the present invention, said allowed network identifier list comprises said at least one allowed radio access network identifier or a portion of said at least one allowed radio access network identifier.

According to a variation of the procedure shown in Figure 7, exemplary additional operations and exemplary details of the controlling operation (S74) are given, which are inherently independent from each other as such. According to such variation, an exemplary method according to exemplary embodiments of the present invention may comprise an operation of maintaining a disallowed network identifier list indicative of at least one disallowed radio access network identifier. Further, such exemplary controlling operation (S74) according to exemplary embodiments of the present invention may comprise an operation of deciding not to connect to said radio access network, if said disallowed network identifier list is indicative of said network identifier of said radio access network.

According to further exemplary embodiments of the present invention, said disallowed network identifier list comprises said at least one disallowed radio access network identifier or a portion of said at least one disallowed radio access network identifier.

Hence, in other words, in addition to the current lists of preferred and forbidden PLMNs, according to exemplary embodiments of the present invention, lists of preferred and forbidden network identifiers (when EAP-AKA or EAP-AKA' are used, for example ANIDs) may be created in USIM or mobile equipment (ME), i.e., UE. Instead of storing the full network identifiers (e.g. ANIDs) in these lists, only one or more of the character strings, of which the network identifier (e.g. ANID) is made up, may be stored as they may suffice for the user to make an informed decision.

As a concrete example, according to exemplary embodiments of the present invention, the UE may maintain a list or a class of alternative LTE networks that the UE is allowed to access, e.g. all LTE networks of the police.

According to a variation of the procedure shown in Figure 7, exemplary additional operations are given, which are inherently independent from each other as such. According to such variation, an exemplary method according to exemplary embodiments of the present invention may comprise an operation of controlling display of said network identifier of said radio access network or said trust related information with respect to said radio access network indicated by said network identifier of said radio access network, and operation of receiving a user input, an operation of deciding to connect to said radio access network, if said user input is indicative of acceptance, and an operation of deciding not to connect to said radio access network, if said user input is indicative of non-acceptance.

That is, in other words, according to exemplary embodiments of the present invention, besides that the ME/UE may act autonomously using the lists of preferred and forbidden PLMNs/ANIDs (i.e. network identifiers), the ME/UE may display the enhanced PLMN identifier structure or ANID structure (in general, the network identifier structure) to the user and wait for the user's decision. Namely, the user may want to give consent each time he connects to a particular alternative LTE network (i.e. particular supplementary radio access network).

According to a variation of the procedure shown in Figure 7, exemplary additional operations are given, which are inherently independent from each other as such. According to such variation, an exemplary method according to exemplary embodiments of the present invention may comprise an operation of controlling display of said network identifier of said radio access network or said trust related information with respect to said radio access network indicated by said network identifier of said radio access network, an operation of receiving a user input, and, if said user input is indicative of acceptance, an operation of deciding to connect to said radio access network and an operation of storing said network identifier of said radio access network or a portion of said network identifier of said radio access network in said allowed network identifier list, and to the contrary, if said user input is indicative of non-acceptance, an operation of deciding not to connect to said radio access network and an operation of storing said network identifier of said radio access network or a portion of said network identifier of said radio access network in said disallowed network identifier list.

That is, in more specific terms, according to exemplary embodiments of the present invention, the UEs may explicitly store those ANIDs or enhanced PLMN identifiers (network identifiers) as acceptable, once the user or UEs have given consent the first time. The same approach is possible for network identifiers once the user or UEs have denied consent the first time.

According to further exemplary embodiments of the present invention, said trust related information is present in a human readable format. According to further exemplary embodiments of the present invention, said trust related information is a human readable friendly name. According to further exemplary embodiments of the present invention, said trust related information comprises an allocation to one of a plurality of predetermined trust classes. According to still further exemplary embodiments of the present invention, said network identifier being different from a public land mobile network identifier.

As a further more specific example of exemplary embodiments of the present invention, the enhanced PLMN identifier structure or ANID structure (i.e. network identifier structure) may be used e.g. to classify visited networks. Examples for such classifications may be "run by home network", "security guaranteed by home network", and "general open access", with decreasing confidence. Such classification could be up to the operator and would not have to be standardized.

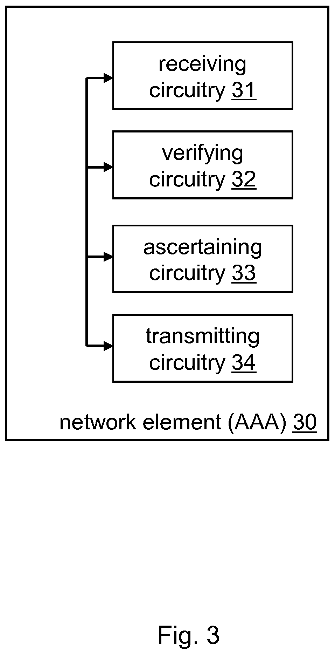

Figure 3 is a block diagram illustrating an apparatus according to exemplary embodiments of the present invention. The apparatus may be a network element 30 such as an authentication, authorization and accounting (AAA) entity (server) comprising a receiving circuitry 31, a verifying circuitry 32, an ascertaining circuitry 33, and a transmitting circuitry 34. The receiving circuitry 31 receives a message from a radio access network including a first network identifier of said radio access network. The verifying circuitry 32 verifies correctness of said first network identifier. The ascertaining circuitry 33 ascertains a second network identifier of said radio access network on the basis of said first network identifier and an allocation table, if said first network identifier is verified as being correct, said second network identifier being indicative of trust related information with respect to said radio access network. The transmitting circuitry 34 transmits a message including said second network identifier of said radio access network.

In an embodiment at least some of the functionalities of the apparatus shown in Figure 3 may be shared between two physically separate devices forming one operational entity. Therefore, the apparatus may be seen to depict the operational entity comprising one or more physically separate devices for executing at least some of the described processes.

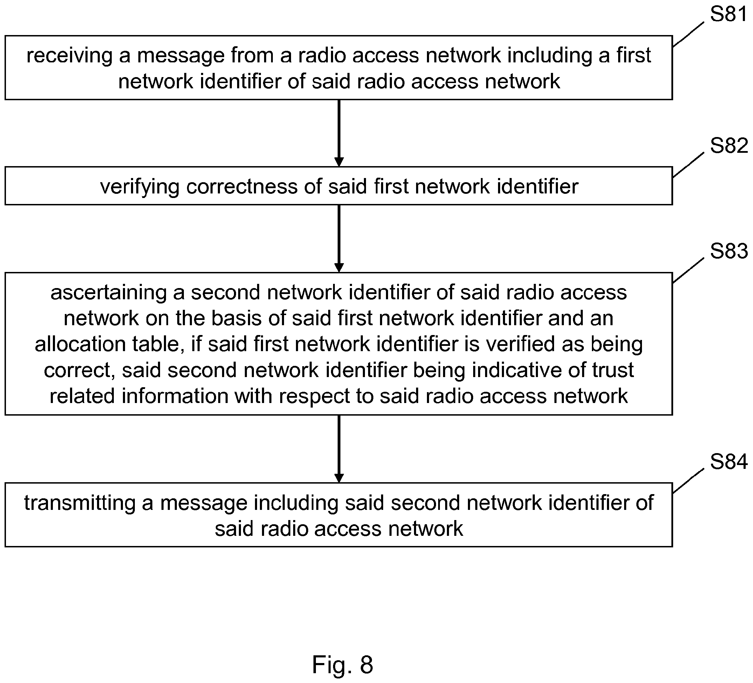

Figure 8 is a schematic diagram of a procedure according to exemplary embodiments of the present invention. The apparatus according to Figure 3 may perform the method of Figure 8 but is not limited to this method. The method of Figure 8 may be performed by the apparatus of Figure 3 but is not limited to being performed by this apparatus.

As shown in Figure 8, a procedure according to exemplary embodiments of the present invention comprises an operation of receiving (S81) a message from a radio access network including a first network identifier of said radio access network, an operation of verifying (S82) correctness of said first network identifier, and operation of ascertaining (S83) a second network identifier of said radio access network on the basis of said first network identifier and an allocation table, if said first network identifier is verified as being correct, said second network identifier being indicative of trust related information with respect to said radio access network, and an operation of transmitting (S84) a message including said second network identifier of said radio access network.

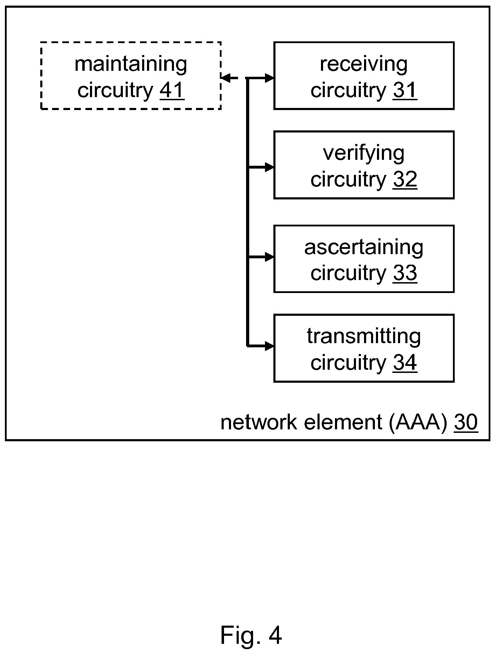

Figure 4 is a block diagram illustrating an apparatus according to exemplary embodiments of the present invention. In particular, Figure 4 illustrates a variation of the apparatus shown in Figure 3. The apparatus according to Figure 4 may thus further comprise a maintaining circuitry 41.

According to exemplary embodiments of the present invention, said second network identifier comprises one or more character strings separated from each other.

According to a variation of the procedure shown in Figure 8, exemplary additional operations are given, which are inherently independent from each other as such. According to such variation, an exemplary method according to exemplary embodiments of the present invention may comprise an operation of maintaining said allocation table including at least one pair consisting of a network identifier to be translated and a translation of said network identifier to be translated.

According to further exemplary embodiments of the present invention, said trust related information being a human readable friendly name. According to further exemplary embodiments of the present invention, said second network identifier being different from a public land mobile network identifier.

In other words, according to exemplary embodiments of the present invention, the AAA server may be equipped as follows. The AAA server has the task to authenticate EAP messages sent by the access network (e.g. a MuLTEfire network). The authenticated identity of this access network may just be a bit string without any particular meaning to a human user. It may therefore be advisable to translate this identity into a so-called "friendly name", i.e., a character string that can be easily understood by a human user, e.g. 'NOKIA EMPLOYEE NETWORK' or '"HOME OPERATOR" MULTEFIRE NETWORK', where "HOME OPERATOR" may be replaced by the name of the user's home operator. Thus, according to exemplary embodiments of the present invention, the AAA server contains a list that maps authenticated identities to friendly names. The value of the ANID in an EAP message sent by the AAA server to the UE would then be set to the friendly name, which the UE can then display to the user.

Figure 5 is a block diagram illustrating an apparatus. The apparatus may be a network element 50 such as a home subscriber server (HSS) comprising an acquiring circuitry 51 and a deriving circuitry 52. The acquiring circuitry 51 acquires a network identifier of a radio access network, said network identifier being indicative of trust related information with respect to said radio access network. The deriving circuitry 52 derives, based on said network identifier, a base key to be utilized for generation of at least one cryptographic key used for communication between said radio access network and a mobile entity connected to said radio access network.

In an embodiment at least some of the functionalities of the apparatus shown in Figure 5 may be shared between two physically separate devices forming one operational entity. Therefore, the apparatus may be seen to depict the operational entity comprising one or more physically separate devices for executing at least some of the described processes.

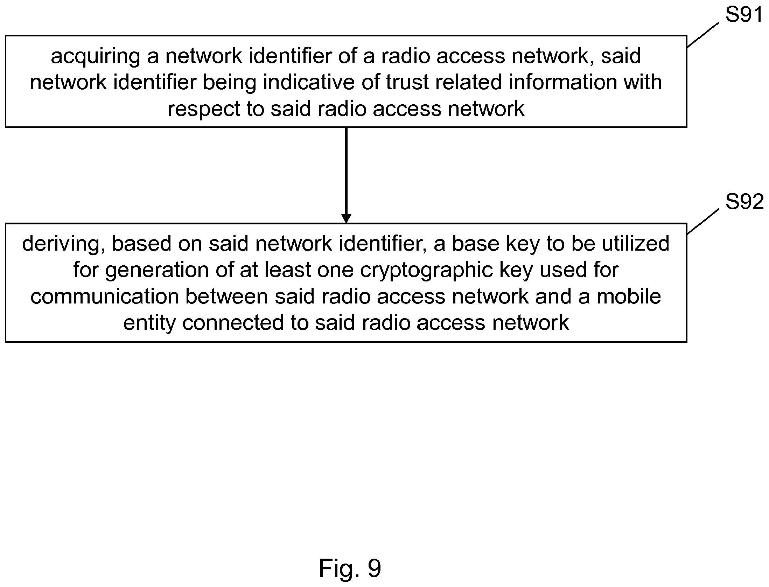

Figure 9 is a schematic diagram of a procedure. The apparatus according to Figure 5 may perform the method of Figure 9 but is not limited to this method. The method of Figure 9 may be performed by the apparatus of Figure 5 but is not limited to being performed by this apparatus.

As shown in Figure 9, a procedure comprises an operation of acquiring (S91) a network identifier of a radio access network, said network identifier being indicative of trust related information with respect to said radio access network, and an operation of deriving (S92), based on said network identifier, a base key to be utilized for generation of at least one cryptographic key used for communication between said radio access network and a mobile entity connected to said radio access network.

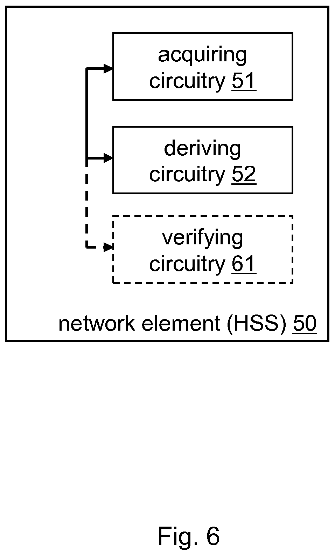

Figure 6 is a block diagram illustrating an apparatus. In particular, Figure 6 illustrates a variation of the apparatus shown in Figure 5. The apparatus according to Figure 6 may thus further comprise a verifying circuitry 61.

With respect to the cryptographic key generation, it is noted that the key derived in this step is not directly used for encryption. Rather the encryption key is derived from this key in another step in the radio access network.

According to exemplary embodiments of the present invention, said network identifier comprises one or more character strings separated from each other.

According to a variation of the procedure shown in Figure 9, exemplary additional operations are given, which are inherently independent from each other as such. According to such variation, an exemplary method according to exemplary embodiments may comprise an operation of verifying said network identifier.

In other words, according to exemplary embodiments, as already mentioned above, the PLMN identifier (or the serving network identifier that is broadcast by the network) may be enhanced by instead either using an ANID itself or taking the ANID structure as a model for extending the PLMN identifier or serving network identifier. This approach is particularly advantageous for E-UTRAN access with EPS AKA.

The enhanced PLMN identifier or the ANID (the network identifier) may be broadcast by the eNB or sent via non-access stratum (NAS) from MME. HSS must know the enhanced PLMN identifier or ANID (network identifier) and use it as an input to K_{ASME} derivation. The MME needs to transfer the enhanced PLMN identifier or ANID (network identifier) to the HSS, the HSS needs to be able to verify it. Alternatively, the HSS can deduce the enhanced PLMN identifier or ANID (network identifier) from other information (local and/or sent in authentication information request). Advantage of making the enhanced PLMN identifier or ANID (network identifier) an input to K_{ASME} derivation is that the enhanced PLMN identifier or ANID (network identifier) is, in this way, securely confirmed by the HSS and can be considered as trustworthy information.

According to further exemplary embodiments of the present invention, said trust related information is present in a human readable format. According to still further exemplary embodiments of the present invention, said trust related information comprises an allocation to one of a plurality of predetermined trust classes. According to still further exemplary embodiments of the present invention, said network identifier being different from a public land mobile network identifier.

Namely, as already mentioned above, according to exemplary embodiments of the present invention, the enhanced PLMN identifier structure or ANID structure (i.e. network identifier structure) may be used e.g. to classify visited networks. Examples for such classifications may be "run by home network", "security guaranteed by home network", and "general open access", with decreasing confidence.

In addition to what is described above, according to exemplary embodiments of the present invention, the ME/UE may also function to translate the enhanced PLMN identifier or ANID (network identifier) structure into text more readable for user.

Furthermore, the user may configure in his device, under which circumstances or for which properties of the system, the UE is enabled to give consent by itself without the human user's involvement. That is, the user is enabled to create respective rules for the UE.

In addition, the UE may display the authenticated network names to the user before continuing the communication over the alternative network (supplementary radio access network).

According to exemplary embodiments of the present invention, the above discussed challenges posed by future scenarios for LTE or 5G networks which may allow a large number of people to set up an alternative LTE network (or supplementary radio access networks) for specific purposes are addressed. In particular, according to principles of the present invention (i.e., giving consent by the user or by the UE on behalf of the user), the threat of connecting to a malicious network by a UE, which is not authorized for this UE, can be minimized.

In this regard, it is noted that various classes of alternative LTE networks (or supplementary radio access networks) may be successively introduced over time in future. Namely, while, for example, firstly public safety networks may be installed, subsequently, various types of commercial networks may be established as well. Due to the modular structure of the network identifier according to the present invention and the fact that the UE will ignore parts of that network identifier that it does not understand, the network identifier according to the present invention can also be extended over time to accommodate more networks. Thus, according to exemplary embodiments of the present invention, the user/UE will be alerted if the UE is attracted by an unknown new network.

The above-described procedures and functions may be implemented by respective functional elements, processors, or the like, as described below.

In the foregoing exemplary description of the network entity, only the units that are relevant for understanding the principles of the invention have been described using functional blocks. The network entity may comprise further units that are necessary for its respective operation. However, a description of these units is omitted in this specification. The arrangement of the functional blocks of the devices is not construed to limit the invention, and the functions may be performed by one block or further split into sub-blocks.

When in the foregoing description it is stated that the apparatus, i.e. network entity (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

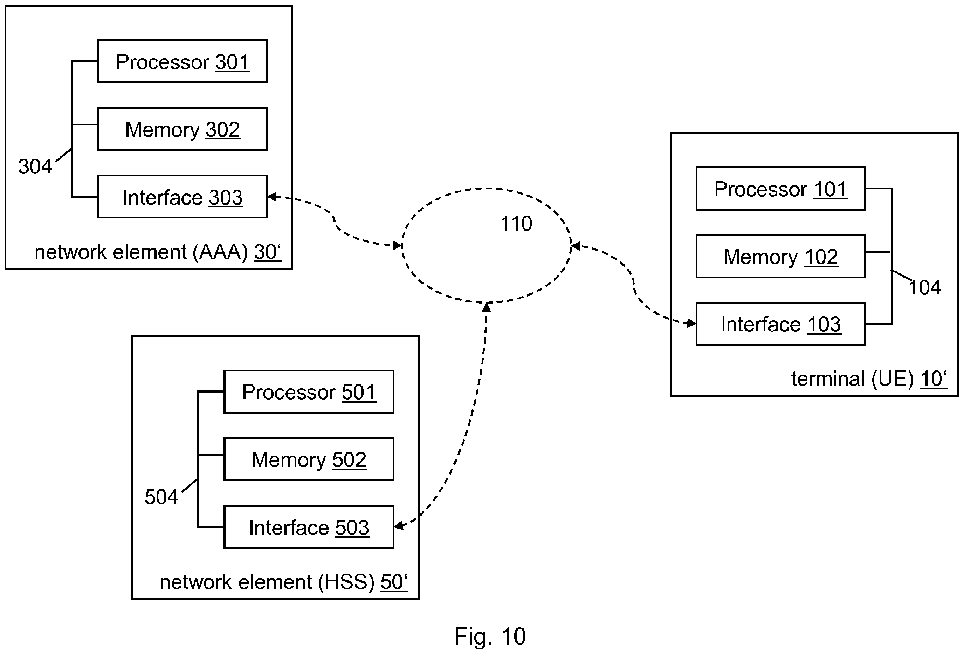

In Figure 10, an alternative illustration of apparatuses depicted. As indicated in Figure 10, according to exemplary embodiments of the present invention, the apparatus (terminal) 10' (corresponding to the terminal 10) comprises a processor 101, a memory 102 and an interface 103, which are connected by a bus 104 or the like. Further, according to exemplary embodiments of the present invention, the apparatus (network element) 30' (corresponding to the network element 30) comprises a processor 301, a memory 302 and an interface 303, which are connected by a bus 304 or the like. Further, according to exemplary embodiments of the present invention, the apparatus (network element) 50' (corresponding to the network element 50) comprises a processor 501, a memory 502 and an interface 503, which are connected by a bus 504 or the like, and the apparatuses may be connected via link 110, respectively.

The processor 101/301/501 and/or the interface 103/303/503 may also include a modem or the like to facilitate communication over a (hardwire or wireless) link, respectively. The interface 103/303/503 may include a suitable transceiver coupled to one or more antennas or communication means for (hardwire or wireless) communications with the linked or connected device(s), respectively. The interface 103/303/503 is generally configured to communicate with at least one other apparatus, i.e. the interface thereof.

The memory 102/302/502 may store respective programs assumed to include program instructions or computer program code that, when executed by the respective processor, enables the respective electronic device or apparatus to operate in accordance with the exemplary embodiments of the present invention.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that at least one processor, potentially in cooperation with computer program code stored in the memory of the respective apparatus, is configured to cause the apparatus to perform at least the thus mentioned function. Also, such function is to be construed to be equivalently implementable by specifically configured means for performing the respective function (i.e. the expression "processor configured to [cause the apparatus to] perform xxx-ing" is construed to be equivalent to an expression such as "means for xxx-ing").

According to exemplary embodiments of the present invention, an apparatus representing the terminal 10 comprises at least one processor 101, at least one memory 102 including computer program code, and at least one interface 103 configured for communication with at least another apparatus. The processor (i.e. the at least one processor 101, with the at least one memory 102 and the computer program code) is configured to perform detecting a connection opportunity to a radio access network (thus the apparatus comprising corresponding means for detecting), to perform obtaining a network identifier of said radio access network, said network identifier being indicative of trust related information with respect to said radio access network (thus the apparatus comprising corresponding means for obtaining), to perform verifying correctness of said network identifier (thus the apparatus comprising corresponding means for verifying), and to perform controlling a selection processing of selecting to connect to said radio access network or not based on said network identifier of said radio access network, if said network identifier is verified as being correct (thus the apparatus comprising corresponding means for controlling).

According to further exemplary embodiments of the present invention, an apparatus representing the network element 30 comprises at least one processor 301, at least one memory 302 including computer program code, and at least one interface 303 configured for communication with at least another apparatus. The processor (i.e. the at least one processor 301, with the at least one memory 302 and the computer program code) is configured to perform receiving a message from a radio access network including a first network identifier of said radio access network (thus the apparatus comprising corresponding means for receiving), to perform verifying correctness of said first network identifier (thus the apparatus comprising corresponding means for verifying), to perform ascertaining a second network identifier of said radio access network on the basis of said first network identifier and an allocation table, if said first network identifier is verified as being correct, said second network identifier being indicative of trust related information with respect to said radio access network (thus the apparatus comprising corresponding means for ascertaining), and to perform transmitting a message including said second network identifier of said radio access network (thus the apparatus comprising corresponding means for transmitting).

According to further exemplary embodiments, an apparatus representing the network element 50 comprises at least one processor 501, at least one memory 502 including computer program code, and at least one interface 503 configured for communication with at least another apparatus. The processor (i.e. the at least one processor 501, with the at least one memory 502 and the computer program code) is configured to perform acquiring a network identifier of a radio access network, said network identifier being indicative of trust related information with respect to said radio access network (thus the apparatus comprising corresponding means for receiving), and to perform deriving, based on said network identifier, a base key to be utilized for generation of at least one cryptographic key used for communication between said radio access network and a mobile entity connected to said radio access network (thus the apparatus comprising corresponding means for deriving).

For further details regarding the operability/functionality of the individual apparatuses, reference is made to the above description in connection with any one of Figures 1 to 9, respectively.

For the purpose of the present invention as described herein above, it should be noted that
- method steps likely to be implemented as software code portions and being run using a processor at a network server or network entity (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. the above-defined network entity or network register, or any one of their respective units/means) can be implemented as individual devices, units or means, but this does not exclude that they are implemented in a distributed fashion throughout the system, as long as the functionality of the device, unit or means is preserved;
- an apparatus like the user equipment and the network entity /network register may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present invention. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present invention also covers any conceivable combination of method steps and operations described above, and any conceivable combination of nodes, apparatuses, modules or elements described above, as long as the above-described concepts of methodology and structural arrangement are applicable.

In view of the above, there are provided measures for network authorization assistance. Such measures exemplarily comprise detecting a connection opportunity to a radio access network, obtaining a network identifier of said radio access network, said network identifier being indicative of trust related information with respect to said radio access network, verifying correctness of said network identifier, and controlling a selection processing of selecting to connect to said radio access network or not based on said network identifier of said radio access network, if said network identifier is verified as being correct.

Even though the invention is described above with reference to the examples according to the accompanying drawings, it is to be understood that the invention is defined in the claims.

### List of acronyms and abbreviations

- 3GPP: 3rd Generation Partnership Project
- 5G: 5th generation
- AAA: authentication, authorization and accounting
- AKA: authentication and key agreement
- ANID: access network identifier
- AV: authentication vector
- EAP: extensible authentication protocol
- eNB: evolved NodeB, eNodeB
- EPC: evolved packet core
- EPS: evolved packet system
- E-UTRAN: Evolved Universal Terrestrial Radio Access Network
- HPLMN: home public land mobile network
- HSS: home subscriber server
- IOPS: isolated operation of E-UTRAN in public safety
- IP: internet protocol
- LTE: Long Term Evolution
- MCC: mobile country code
- ME: mobile equipment
- MME: mobility management entity
- MNC: mobile network code
- NAS: non-access stratum
- PLMN: public land mobile network
- SALTE: secondary access LTE
- S-GW: serving gateway
- USIM: universal subscriber identity module
- UE: user equipment
- WiMAX: worldwide interoperability for microwave access
- WLAN: wireless local area network

## Claims

1. A method performed by a terminal (10), the method comprising
detecting (S71) a connection opportunity to a radio access network other than a home public land mobile network of said terminal,
obtaining (S72), from an authentication, authorization and accounting entity (30) of said home public land mobile network of said terminal, a second network identifier of said radio access network ascertained by said authentication, authorization and accounting entity of said home public land mobile network of said terminal on the basis of a first network identifier of said radio access network, said second network identifier being indicative of trust related information with respect to said radio access network, wherein said trust related information comprises an allocation to one of a plurality of predetermined trust classes having different confidence levels,
verifying (S73) correctness of said second network identifier, and
controlling (S74) a selection processing of selecting to connect to said radio access network or not based on said second network identifier of said radio access network, if said second network identifier is verified as being correct.

2. The method according to claim 1, wherein
said second network identifier comprises one or more character strings separated from each other.

3. The method according to claim 1 or 2, further comprising
maintaining an allowed network identifier list indicative of at least one allowed radio access network identifier, wherein
in relation to said controlling (S74), said method further comprises deciding to connect to said radio access network, if said allowed network identifier list is indicative of said second network identifier of said radio access network.

4. The method according to claim 3, wherein
said allowed network identifier list comprises said at least one allowed radio access network identifier or a portion of said at least one allowed radio access network identifier.

5. The method according to any of claims 1 to 4, further comprising
maintaining a disallowed network identifier list indicative of at least one disallowed radio access network identifier, wherein
in relation to said controlling (S74), said method further comprises deciding not to connect to said radio access network, if said disallowed network identifier list is indicative of said second network identifier of said radio access network.

6. The method according to claim 5, wherein
said disallowed network identifier list comprises said at least one disallowed radio access network identifier or a portion of said at least one disallowed radio access network identifier.

7. The method according to any of claims 1 to 6, further comprising
controlling display of said second network identifier of said radio access network or said trust related information with respect to said radio access network indicated by said second network identifier of said radio access network,
receiving a user input,
deciding to connect to said radio access network, if said user input is indicative of acceptance, and
deciding not to connect to said radio access network, if said user input is indicative of non-acceptance.

8. The method according to claims 5 or 6, further comprising
controlling display of said second network identifier of said radio access network or said trust related information with respect to said radio access network indicated by said second network identifier of said radio access network,
receiving a user input, and
if said user input is indicative of acceptance
deciding to connect to said radio access network, and
storing said second network identifier of said radio access network or a portion of said second network identifier of said radio access network in said allowed network identifier list, and
if said user input is indicative of non-acceptance
deciding not to connect to said radio access network, and storing said second network identifier of said radio access network or a portion of said second network identifier of said radio access network in said disallowed network identifier list.

9. A method performed by an authentication, authorization and accounting entity (30) of a network serving a terminal (10) being a home public land mobile network of said terminal, the method comprising
receiving (S81) a message from a radio access network other than said home public land mobile network of said terminal including a first network identifier of said radio access network,
verifying (S82) correctness of said first network identifier,
ascertaining (S83) a second network identifier of said radio access network on the basis of said first network identifier and an allocation table, if said first network identifier is verified as being correct, said second network identifier being indicative of trust related information with respect to said radio access network, wherein said trust related information comprises an allocation to one of a plurality of predetermined trust classes having different confidence levels, and
transmitting (S84), to said terminal, a message including said second network identifier of said radio access network.

10. An apparatus of a terminal (10), the apparatus comprising
at least one processor (101),
at least one memory (102) including computer program code, and
at least one interface (103) configured for communication with at least another apparatus,
the at least one processor, with the at least one memory and the computer program code, being configured to cause the apparatus to perform:
detecting a connection opportunity to a radio access network other than a home public land mobile network of said terminal,
obtaining, from an authentication, authorization and accounting entity (30) of said home public land mobile network of said terminal, a second network identifier of said radio access network ascertained by said authentication, authorization and accounting entity of said home public land mobile network of said terminal on the basis of a first network identifier of said radio access network, said second network identifier being indicative of trust related information with respect to said radio access network , wherein said trust related information comprises an allocation to one of a plurality of predetermined trust classes having different confidence levels,
verifying correctness of said second network identifier, and
controlling a selection processing of selecting to connect to said radio access network or not based on said second network identifier of said radio access network, if said second network identifier is verified as being correct.

11. The apparatus according to claim 10, wherein
the at least one processor (101), with the at least one memory (102) and the computer program code, being configured to cause the apparatus to perform:
maintaining an allowed network identifier list indicative of at least one allowed radio access network identifier, and
in relation to said controlling, the at least one processor, with the at least one memory and the computer program code, being configured to cause the apparatus to perform:
deciding to connect to said radio access network, if said allowed network identifier list is indicative of said second network identifier of said radio access network.

12. The apparatus according to claim 11, wherein
said allowed network identifier list comprises said at least one allowed radio access network identifier or a portion of said at least one allowed radio access network identifier.

13. The apparatus according to any of claims 10 to 12, wherein
the at least one processor (101), with the at least one memory (102) and the computer program code, being configured to cause the apparatus to perform:
maintaining a disallowed network identifier list indicative of at least one disallowed radio access network identifier, and
in relation to said controlling, the at least one processor, with the at least one memory and the computer program code, being configured to cause the apparatus to perform:
deciding not to connect to said radio access network, if said disallowed network identifier list is indicative of said second network identifier of said radio access network.

14. The apparatus according to claim 13, wherein
said disallowed network identifier list comprises said at least one disallowed radio access network identifier or a portion of said at least one disallowed radio access network identifier.

15. The apparatus according to any of claims 10 to 14, wherein
said trust related information is present in a human readable format, and/or
said trust related information is a human readable friendly name, and/or
said trust related information comprises an allocation to one of a plurality of predetermined trust classes, and/or
said second network identifier being different from a public land mobile network identifier.

16. An apparatus of an authentication, authorization and accounting entity (30) of a network serving a terminal (10) being a home public land mobile network of said terminal, the apparatus comprising
at least one processor (301),
at least one memory (302) including computer program code, and
at least one interface (303) configured for communication with at least another apparatus,
the at least one processor, with the at least one memory and the computer program code, being configured to cause the apparatus to perform:
receiving a message from a radio access network other than said home public land mobile network of said terminal including a first network identifier of said radio access network,
verifying correctness of said first network identifier,
ascertaining a second network identifier of said radio access network on the basis of said first network identifier and an allocation table, if said first network identifier is verified as being correct, said second network identifier being indicative of trust related information with respect to said radio access network, wherein said trust related information comprises an allocation to one of a plurality of predetermined trust classes having different confidence levels, and
transmitting, to said terminal, a message including said second network identifier of said radio access network.

17. The apparatus according to claim 16, wherein
the at least one processor (301), with the at least one memory (302) and the computer program code, being configured to cause the apparatus to perform:
maintaining said allocation table including at least one pair consisting of a network identifier to be translated and a translation of said network identifier to be translated.

18. A computer program product comprising computer-executable computer program code which, when the program is run on a processor of a terminal, is configured to cause the processor to carry out the method according to any one of claims 1 to 8, or, when the program is run on a processor of an authentication, authorization and accounting entity of a network serving a terminal being a home public land mobile network of said terminal, is configured to cause the processor to carry out the method according to claim 9.

19. The computer program product according to claim 18, wherein the computer program product comprises a computer-readable medium on which the computer-executable computer program code is stored, and/or wherein the program is directly loadable into an internal memory of the processor.

## Patentansprüche

1. Verfahren, das durch ein Endgerät (10) durchgeführt wird, wobei das Verfahren umfasst:
Erkennen (S71) einer Verbindungsgelegenheit mit einem Funkzugangsnetz, das sich von einem Heimmobilfunknetz (Home Public Land Mobile Network) des Endgeräts unterscheidet,
Erhalten (S72), von einer Authentifizierungs-, Autorisierungs- und Abrechnungsentität (30) des Heimmobilfunknetzes des Endgeräts, einer zweiten Netzkennung des Funkzugangsnetzes, die von der Authentifizierungs-, Autorisierungs- und Abrechnungsentität des Heimmobilfunknetzes des Endgeräts basierend auf einer ersten Netzkennung des Funkzugangsnetzes festgestellt wurde, wobei die zweite Netzkennung vertrauensbezogene Informationen in Bezug auf das Funkzugangsnetz angibt, wobei die vertrauensbezogenen Informationen eine Zuweisung zu einer von einer Vielzahl von vorbestimmten Vertrauensklassen umfasst, die verschiedene Vertrauensniveaus aufweisen,
Prüfen (S73) der Richtigkeit der zweiten Netzkennung, und
Steuern (S74) einer Auswahlverarbeitung zum Auswählen des Verbindens oder Nichtverbindens mit dem Funkzugangsnetz basierend auf der zweiten Netzkennung des Funkzugangsnetzes, wenn die zweite Netzkennung als richtig geprüft wurde.

2. Verfahren nach Anspruch 1, wobei
die zweite Netzkennung eine oder mehrere voneinander getrennte Zeichenfolgen umfasst.

3. Verfahren nach Anspruch 1 oder 2, das ferner umfasst:
Pflegen einer Liste zulässiger Netzkennungen, die mindestens eine zulässige Funkzugangsnetzkennung angibt, wobei
das Verfahren in Verbindung mit dem Steuern (S74) ferner umfasst
Entscheiden des Verbindens mit dem Funkzugangsnetz, wenn die Liste zulässiger Netzkennungen die zweite Netzkennung des Funkzugangsnetzes angibt.

4. Verfahren nach Anspruch 3, wobei
die Liste zulässiger Netzkennungen die mindestens eine zulässige Funkzugangsnetzkennung oder einen Abschnitt der mindestens einen zulässigen Funkzugangsnetzkennung umfasst.

5. Verfahren nach einem der Ansprüche 1 bis 4, das ferner umfasst:
Pflegen einer Liste unzulässiger Netzkennungen, die mindestens eine unzulässige Funkzugangsnetzkennung angibt, wobei
das Verfahren in Verbindung mit dem Steuern (S74) ferner umfasst
Entscheiden des Nichtverbindens mit dem Funkzugangsnetz, wenn die Liste unzulässiger Netzkennungen die zweite Netzkennung des Funkzugangsnetzes angibt.

6. Verfahren nach Anspruch 5, wobei
die Liste unzulässiger Netzkennungen die mindestens eine unzulässige Funkzugangsnetzkennung oder einen Abschnitt der mindestens einen unzulässigen Funkzugangsnetzkennung umfasst.

7. Verfahren nach einem der Ansprüche 1 bis 6, das ferner umfasst:
Steuern der Anzeige der zweiten Netzkennung des Funkzugangsnetzes oder der vertrauensbezogenen Informationen in Bezug auf das Funkzugangsnetz, das von der zweiten Netzkennung des Funkzugangsnetzes angegeben wird,
Empfangen einer Benutzereingabe,
Entscheiden des Verbindens mit dem Funkzugangsnetz, wenn die Benutzereingabe eine Einwilligung angibt, und
Entscheiden des Nichtverbindens mit dem Funkzugangsnetz, wenn die Benutzereingabe eine Nichteinwilligung angibt.

8. Verfahren nach Anspruch 5 oder 6, das ferner umfasst:
Steuern der Anzeige der zweiten Netzkennung des Funkzugangsnetzes oder der vertrauensbezogenen Informationen in Bezug auf das Funkzugangsnetz, das von der zweiten Netzkennung des Funkzugangsnetzes angegeben wird,
Empfangen einer Benutzereingabe, und
wenn die Benutzereingabe eine Einwilligung angibt
Entscheiden des Verbindens mit dem Funkzugangsnetz,
und
Speichern der zweiten Netzkennung des Funkzugangsnetzes oder eines Abschnitts der zweiten Netzkennung des Funkzugangsnetzes in der Liste zulässiger Netzkennungen, und
wenn die Benutzereingabe eine Nichteinwilligung angibt
Entscheiden des Nichtverbindens mit dem Funkzugangsnetz, und
Speichern der zweiten Netzkennung des Funkzugangsnetzes oder eines Abschnitts der zweiten Netzkennung des Funkzugangsnetzes in der Liste unzulässiger Netzkennungen.

9. Verfahren, das durch eine Authentifizierungs-, Autorisierungs- und Abrechnungsentität (30) eines Netzes durchgeführt wird, das ein Endgerät (10) versorgt und das ein Heimmobilfunknetz des Endgeräts ist, wobei das Verfahren umfasst
Empfangen (S81) einer Nachricht von einem Funkzugangsnetz, das sich von dem Heimmobilfunknetz des Endgeräts unterscheidet, die eine erste Netzkennung des Funkzugangsnetzes umfasst,
Prüfen (S82) der Richtigkeit der ersten Netzkennung, Feststellen (S83) einer zweiten Netzkennung des Funkzugangsnetzes basierend auf der ersten Netzkennung und einer Zuweisungstabelle, wenn die erste Netzkennung als richtig geprüft wurde, wobei die zweite Netzkennung vertrauensbasierte Informationen in Bezug auf das Funkzugangsnetz angibt, wobei die vertrauensbasierten Informationen eine Zuweisung zu einer von einer Vielzahl von vorbestimmten Vertrauensklassen umfasst, die verschiedene Vertrauensniveaus aufweisen, und
Senden (S84) einer Nachricht, die die zweite Netzkennung des Funkzugangsnetzes umfasst, an das Endgerät.

10. Vorrichtung eines Endgeräts (10), wobei die Vorrichtung umfasst
mindestens einen Prozessor (101),
mindestens einen Speicher (102), der Computerprogrammcode umfasst, und
mindestens eine Schnittstelle (103), die zur Kommunikation mit mindestens einer anderen Vorrichtung konfiguriert ist,
wobei der mindestens eine Prozessor mit dem mindestens einen Speicher und dem Computerprogrammcode konfiguriert ist, um zu bewirken, dass die Vorrichtung durchführt:
Erkennen einer Verbindungsgelegenheit mit einem Funkzugangsnetz, das sich von einem Heimmobilfunknetz des Endgeräts unterscheidet,
Erhalten, von einer Authentifizierungs-, Autorisierungs- und Abrechnungsentität (30) des Heimmobilfunknetzes des Endgeräts, einer zweiten Netzkennung des Funkzugangsnetzes, die von der Authentifizierungs-, Autorisierungs- und Abrechnungsentität des Heimmobilfunknetzes des Endgeräts basierend auf einer ersten Netzkennung des Funkzugangsnetzes festgestellt wurde, wobei die zweite Netzkennung vertrauensbezogene Informationen in Bezug auf das Funkzugangsnetz angibt, wobei die vertrauensbezogenen Informationen eine Zuweisung zu einer von einer Vielzahl von vorbestimmten Vertrauensklassen umfasst, die verschiedene Vertrauensniveaus aufweisen,
Prüfen der Richtigkeit der zweiten Netzkennung, und
Steuern einer Auswahlverarbeitung zum Auswählen des Verbindens oder Nichtverbindens mit dem Funkzugangsnetz basierend auf der zweiten Netzkennung des Funkzugangsnetzes, wenn die zweite Netzkennung als richtig geprüft wurde.

11. Vorrichtung nach Anspruch 10, wobei
der mindestens eine Prozessor (101) mit dem mindestens einen Speicher (102) und dem Computerprogrammcode konfiguriert ist, um zu bewirken, dass die Vorrichtung durchführt:
Pflegen einer Liste zulässiger Netzkennungen, die mindestens eine zulässige Funkzugangsnetzkennung angibt, und
in Verbindung mit dem Steuern der mindestens eine Prozessor mit dem mindestens einen Speicher und dem Computerprogrammcode konfiguriert ist, um zu bewirken, dass die Vorrichtung durchführt:
Entscheiden des Verbindens mit dem Funkzugangsnetz, wenn die Liste zulässiger Netzkennungen die zweite Netzkennung des Funkzugangsnetzes angibt.

12. Vorrichtung nach Anspruch 11, wobei
die Liste zulässiger Netzkennungen die mindestens eine zulässige Funkzugangsnetzkennung oder einen Abschnitt der mindestens einen zulässigen Funkzugangsnetzkennung umfasst.

13. Vorrichtung nach einem der Ansprüche 10 bis 12, wobei
der mindestens eine Prozessor (101) mit dem mindestens einen Speicher (102) und dem Computerprogrammcode konfiguriert ist, um zu bewirken, dass die Vorrichtung durchführt:
Pflegen einer Liste unzulässiger Netzkennungen, die mindestens eine unzulässige Funkzugangsnetzkennung angibt, und
in Verbindung mit dem Steuern der mindestens eine Prozessor mit dem mindestens einen Speicher und dem Computerprogrammcode konfiguriert ist, um zu bewirken, dass die Vorrichtung durchführt:
Entscheiden des Nichtverbindens mit dem Funkzugangsnetz, wenn die Liste unzulässiger Netzkennungen die zweite Netzkennung des Funkzugangsnetzes angibt.

14. Vorrichtung nach Anspruch 13, wobei
die Liste unzulässiger Netzkennungen die mindestens eine unzulässige Funkzugangsnetzkennung oder einen Abschnitt der mindestens einen unzulässigen Funkzugangsnetzkennung umfasst.

15. Vorrichtung nach einem der Ansprüche 10 bis 14, wobei
die vertrauensbasierten Informationen in einem menschenlesbaren Format vorhanden sind, und/oder
die vertrauensbasierten Informationen ein humanlesefreundlicher Name sind und/oder
die vertrauensbasierten Informationen eine Zuweisung zu einer von einer Vielzahl von vorbestimmten Vertrauensklassen umfasst, und/oder
die zweite Netzkennung sich von einer Heimmobilfunknetzkennung unterscheidet.

16. Vorrichtung einer Authentifizierungs-, Autorisierungs- und Abrechnungsentität (30) eines Netzes, das ein Endgerät (10) versorgt und ein Heimmobilfunknetz des Endgeräts ist, wobei die Vorrichtung umfasst:
mindestens einen Prozessor (301),
mindestens einen Speicher (302), der Computerprogrammcode umfasst, und
mindestens eine Schnittstelle (303), die zur Kommunikation mit mindestens einer anderen Vorrichtung konfiguriert ist,
wobei der mindestens eine Prozessor mit dem mindestens einen Speicher und dem Computerprogrammcode konfiguriert ist, um zu bewirken, dass die Vorrichtung durchführt:
Empfangen einer Nachricht von einem Funkzugangsnetz, das sich von dem Heimmobilfunknetz des Endgeräts unterscheidet, die eine erste Netzkennung des Funkzugangsnetzes umfasst,
Prüfen der Richtigkeit der ersten Netzkennung,
Feststellen einer zweiten Netzkennung des Funkzugangsnetzes basierend auf der ersten Netzkennung und einer Zuweisungstabelle, wenn die erste Netzkennung als richtig geprüft wurde, wobei die zweite Netzkennung vertrauensbasierte Informationen in Bezug auf das Funkzugangsnetz angibt, wobei die vertrauensbasierten Informationen eine Zuweisung zu einer von einer Vielzahl von vorbestimmten Vertrauensklassen umfasst, die verschiedene Vertrauensniveaus aufweisen, und
Senden einer Nachricht, die die zweite Netzkennung des Funkzugangsnetzes umfasst, an das Endgerät.

17. Vorrichtung nach Anspruch 16, wobei
der mindestens eine Prozessor (301) mit dem mindestens einen Speicher (302) und dem Computerprogrammcode konfiguriert ist, um zu bewirken, dass die Vorrichtung durchführt:
Pflegen der Zuweisungstabelle, die mindestens ein Paar umfasst, das aus einer zu übersetzenden Netzkennung und einer Übersetzung der zu übersetzenden Netzkennung besteht.

18. Computerprogrammprodukt, das computerausführbaren Computerprogrammcode umfasst, der, wenn das Programm auf einem Prozessor eines Endgeräts läuft, konfiguriert ist, um zu bewirken, dass der Prozessor das Verfahren nach einem der Ansprüche 1 bis 8 durchführt, oder, wenn das Programm auf einem Prozessor einer Authentifizierungs-, Autorisierungs- und Abrechnungsentität eines Netzes läuft, das ein Endgerät versorgt und das ein Heimmobilfunknetz des Endgeräts ist, konfiguriert ist, um zu bewirken, dass der Prozessor das Verfahren nach Anspruch 9 durchführt.

19. Computerprogrammprodukt nach Anspruch 18, wobei das Computerprogrammprodukt einen computerlesbaren Datenträger umfasst, auf dem der computerausführbare Programmcode gespeichert ist, und/oder wobei das Programm direkt in einen internen Speicher des Prozessors ladbar ist.

## Revendications

1. Procédé réalisé par un terminal (10), le procédé comprenant
la détection (S71) d'une opportunité de connexion à un réseau d'accès radio autre qu'un réseau mobile terrestre public d'origine dudit terminal,
l'obtention (S72), à partir d'une entité d'authentification, d'autorisation et de comptabilisation (30) dudit réseau mobile terrestre public d'origine dudit terminal, d'un second identifiant de réseau dudit réseau d'accès radio constaté par ladite entité d'authentification, d'autorisation et de comptabilisation dudit réseau mobile terrestre public d'origine dudit terminal sur la base d'un premier identifiant de réseau dudit réseau d'accès radio, ledit second identifiant de réseau étant indicatif d'informations liées à la confiance en rapport avec ledit réseau d'accès radio, dans lequel lesdites informations liées à la confiance comprennent une allocation vers l'une d'une pluralité de classes de confiance prédéterminées ayant différents niveaux de confiance,
la vérification (S73) de l'exactitude dudit second identifiant de réseau, et
la commande (S74) d'un traitement de sélection consistant à sélectionner de se connecter audit réseau d'accès radio ou non sur la base dudit second identifiant de réseau dudit réseau d'accès radio, si ledit second identifiant de réseau est vérifié comme étant correct.

2. Procédé selon la revendication 1, dans lequel
ledit second identifiant de réseau comprend une ou plusieurs chaînes de caractères séparées les unes des autres.

3. Procédé selon la revendication 1 ou 2, comprenant en outre
la tenue d'une liste d'identifiants de réseau autorisés indicative d'au moins un identifiant de réseau d'accès radio autorisé, dans lequel
en lien avec ladite commande (S74), ledit procédé comprend en outre
la décision de se connecter audit réseau d'accès radio, si ladite liste d'identifiants de réseau autorisés est indicative dudit second identifiant de réseau dudit réseau d'accès radio.

4. Procédé selon la revendication 3, dans lequel
ladite liste d'identifiants de réseau autorisés comprend ledit au moins un identifiant de réseau d'accès radio autorisé ou une partie dudit au moins un identifiant de réseau d'accès radio autorisé.

5. Procédé selon l'une quelconque des revendications 1 à 4, comprenant en outre
la tenue d'une liste d'identifiants de réseau refusés indicative d'au moins un identifiant de réseau d'accès radio refusé, dans lequel
en lien avec ladite commande (S74), ledit procédé comprend en outre
la décision de ne pas se connecter audit réseau d'accès radio, si ladite liste d'identifiants de réseau refusés est indicative dudit second identifiant de réseau dudit réseau d'accès radio.

6. Procédé selon la revendication 5, dans lequel
ladite liste d'identifiants de réseau refusés comprend ledit au moins un identifiant de réseau d'accès radio refusé ou une partie dudit au moins un identifiant de réseau d'accès radio refusé.

7. Procédé selon l'une quelconque des revendications 1 à 6, comprenant en outre
la commande de l'affichage dudit second identifiant de réseau dudit réseau d'accès radio ou desdites informations liées à la confiance en rapport avec ledit réseau d'accès radio indiqué par ledit second identifiant de réseau dudit réseau d'accès radio,
la réception d'une entrée d'utilisateur,
la décision de se connecter audit réseau d'accès radio, si ladite entrée d'utilisateur est indicative d'une acceptation, et
la décision de ne pas se connecter audit réseau d'accès radio, si ladite entrée d'utilisateur est indicative d'une non-acceptation.

8. Procédé selon les revendications 5 ou 6, comprenant en outre
la commande de l'affichage dudit second identifiant de réseau dudit réseau d'accès radio ou desdites informations liées à la confiance en rapport avec ledit réseau d'accès radio indiqué par ledit second identifiant de réseau dudit réseau d'accès radio,
la réception d'une entrée d'utilisateur, et
si ladite entrée d'utilisateur est indicative d'une acceptation
la décision de se connecter audit réseau d'accès radio, et le stockage dudit second identifiant de réseau dudit réseau d'accès radio ou d'une partie dudit second identifiant de réseau dudit réseau d'accès radio dans ladite liste d'identifiants de réseau autorisés, et
si ladite entrée d'utilisateur est indicative d'une non-acceptation
la décision de ne pas se connecter audit réseau d'accès radio, et
le stockage dudit second identifiant de réseau dudit réseau d'accès radio ou d'une partie dudit second identifiant de réseau dudit réseau d'accès radio dans ladite liste d'identifiants de réseau refusés.

9. Procédé réalisé par une entité d'authentification, d'autorisation et de comptabilisation (30) d'un réseau desservant un terminal (10) qui est un réseau mobile terrestre public d'origine dudit terminal, le procédé comprenant
la réception (S81) d'un message à partir d'un réseau d'accès radio autre que ledit réseau mobile terrestre public d'origine dudit terminal incluant un premier identifiant de réseau dudit réseau d'accès radio,
la vérification (S82) de l'exactitude dudit premier identifiant de réseau,
la constatation (S83) d'un second identifiant de réseau dudit réseau d'accès radio sur la base dudit premier identifiant de réseau et d'une table d'allocation, si ledit premier identifiant de réseau est vérifié comme étant correct, ledit second identifiant de réseau étant indicatif d'informations liées à la confiance en rapport avec ledit réseau d'accès radio, dans lequel lesdites informations liées à la confiance comprennent une allocation vers l'une d'une pluralité de classes de confiance prédéterminées ayant différents niveaux de confiance, et
l'émission (S84), vers ledit terminal, d'un message incluant ledit second identifiant de réseau dudit réseau d'accès radio.

10. Appareil d'un terminal (10), l'appareil comprenant au moins un processeur (101),
au moins une mémoire (102) incluant un code de programme d'ordinateur, et
au moins une interface (103) configurée pour une communication avec au moins un autre appareil,
le au moins un processeur, avec la au moins une mémoire et le code de programme d'ordinateur, étant configuré pour amener l'appareil à réaliser :
la détection d'une opportunité de connexion à un réseau d'accès radio autre qu'un réseau mobile terrestre public d'origine dudit terminal,
l'obtention, à partir d'une entité d'authentification, d'autorisation et de comptabilisation (30) dudit réseau mobile terrestre public d'origine dudit terminal, d'un second identifiant de réseau dudit réseau d'accès radio constaté par ladite entité d'authentification, d'autorisation et de comptabilisation dudit réseau mobile terrestre public d'origine dudit terminal sur la base d'un premier identifiant de réseau dudit réseau d'accès radio, ledit second identifiant de réseau étant indicatif d'informations liées à la confiance en rapport avec ledit réseau d'accès radio, dans lequel lesdites informations liées à la confiance comprennent une allocation vers l'une d'une pluralité de classes de confiance prédéterminées ayant différents niveaux de confiance,
la vérification de l'exactitude dudit second identifiant de réseau, et
la commande d'un traitement de sélection consistant à sélectionner de se connecter audit réseau d'accès radio ou non sur la base dudit second identifiant de réseau dudit réseau d'accès radio, si ledit second identifiant de réseau est vérifié comme étant correct.

11. Appareil selon la revendication 10, dans lequel
le au moins un processeur (101), avec la au moins une mémoire (102) et le code de programme d'ordinateur, étant configuré pour amener l'appareil à réaliser :
la tenue d'une liste d'identifiants de réseau autorisés indicative d'au moins un identifiant de réseau d'accès radio autorisé, et
en lien avec ladite commande, le au moins un processeur, avec la au moins une mémoire et le code de programme d'ordinateur, étant configuré pour amener l'appareil à réaliser :
la décision de se connecter audit réseau d'accès radio, si ladite liste d'identifiants de réseau autorisés est indicative dudit second identifiant de réseau dudit réseau d'accès radio.

12. Appareil selon la revendication 11, dans lequel ladite liste d'identifiants de réseau autorisés comprend ledit au moins un identifiant de réseau d'accès radio autorisé ou une partie dudit au moins un identifiant de réseau d'accès radio autorisé.

13. Appareil selon l'une quelconque des revendications 10 à 12, dans lequel
le au moins un processeur (101), avec la au moins une mémoire (102) et le code de programme d'ordinateur, étant configuré pour amener l'appareil à réaliser :
la tenue d'une liste d'identifiants de réseau refusés indicative d'au moins un identifiant de réseau d'accès radio refusé, et
en lien avec ladite commande, le au moins un processeur, avec la au moins une mémoire et le code de programme d'ordinateur, étant configuré pour amener l'appareil à réaliser :
la décision de ne pas se connecter audit réseau d'accès radio, si ladite liste d'identifiants de réseau refusés est indicative dudit second identifiant de réseau dudit réseau d'accès radio.

14. Appareil selon la revendication 13, dans lequel ladite liste d'identifiants de réseau refusés comprend ledit au moins un identifiant de réseau d'accès radio refusé ou une partie dudit au moins un identifiant de réseau d'accès radio refusé.

15. Appareil selon l'une quelconque des revendications 10 à 14, dans lequel
lesdites informations liées à la confiance sont présentes sous un format lisible par un être humain, et/ou
lesdites informations liées à la confiance sont un nom convivial lisible par un être humain, et/ou
lesdites informations liées à la confiance comprennent une allocation vers l'une d'une pluralité de classes de confiance prédéterminées, et/ou
ledit second identifiant de réseau étant différent d'un identifiant de réseau mobile terrestre public.

16. Appareil d'une entité d'authentification, d'autorisation et de comptabilisation (30) d'un réseau desservant un terminal (10) qui est un réseau mobile terrestre public d'origine dudit terminal, l'appareil comprenant
au moins un processeur (301),
au moins une mémoire (302) incluant un code de programme d'ordinateur, et
au moins une interface (303) configurée pour une communication avec au moins un autre appareil,
le au moins un processeur, avec la au moins une mémoire et le code de programme d'ordinateur, étant configuré pour amener l'appareil à réaliser :
la réception d'un message à partir d'un réseau d'accès radio autre que ledit réseau mobile terrestre public d'origine dudit terminal incluant un premier identifiant de réseau dudit réseau d'accès radio,
la vérification de l'exactitude dudit premier identifiant de réseau,
la constatation d'un second identifiant de réseau dudit réseau d'accès radio sur la base dudit premier identifiant de réseau et d'une table d'allocation, si ledit premier identifiant de réseau est vérifié comme étant correct, ledit second identifiant de réseau étant indicatif d'informations liées à la confiance en rapport avec ledit réseau d'accès radio, dans lequel lesdites informations liées à la confiance comprennent une allocation vers l'une d'une pluralité de classes de confiance prédéterminées ayant différents niveaux de confiance, et
l'émission, vers ledit terminal, d'un message incluant ledit second identifiant de réseau dudit réseau d'accès radio.

17. Appareil selon la revendication 16, dans lequel
le au moins un processeur (301), avec la au moins une mémoire (302) et le code de programme d'ordinateur, étant configuré pour amener l'appareil à réaliser :
la tenue de ladite table d'allocation incluant au moins une paire constituée d'un identifiant de réseau devant être traduit et d'une traduction dudit identifiant de réseau devant être traduit.

18. Produit programme d'ordinateur comprenant un code de programme d'ordinateur exécutable par ordinateur qui, lorsque le programme est exécuté sur un processeur d'un terminal, est configuré pour amener le processeur à mettre en œuvre le procédé selon l'une quelconque des revendications 1 à 8, ou, lorsque le programme est exécuté sur un processeur d'une entité d'authentification, d'autorisation et de comptabilisation d'un réseau desservant un terminal qui est un réseau mobile terrestre public d'origine dudit terminal, est configuré pour amener le processeur à mettre en œuvre le procédé selon la revendication 9.

19. Produit programme d'ordinateur selon la revendication 18, dans lequel le produit programme d'ordinateur comprend un support lisible par ordinateur sur lequel le code de programme d'ordinateur exécutable par ordinateur est stocké, et/ou dans lequel le programme est apte à être directement chargé dans une mémoire interne du processeur.
